# DEMANDE DE BREVET EUROPEEN

(11) **EP 1 522 829 A2**
(43) Date de publication de la demande: **13.04.2005**
(21) Numéro de dépôt: 04292355.7
(22) Date de dépôt: 05.10.2004
(51) Int. Cl.: G01F 23/74

(54) **Dispositif de détection de niveaux de liquide**

(30) Priorité: 06.10.2003 FR 0311690
(71) Demandeur: Sauermann Industrie, 77173 Chevry Cossigny (FR)
(72) Inventeur: Villandre, Jean-Louis, 92100 Boulogne (FR)
(74) Mandataire: Intès, Didier Gérard André

(57) **Abrégé**

Dispositif de détection de niveaux de liquide comprenant un réservoir (120) apte à communiquer avec un bac de récupération de liquide d'une installation de climatisation et avec une pompe hydraulique, ce dispositif (106) étant destiné à être connecté, d'une part, à la commande de la pompe de manière à mettre la pompe en fonctionnement lorsque la hauteur de liquide dans le réservoir (120) atteint un niveau maximum autorisé Ma et à arrêter le fonctionnement de la pompe lorsque la hauteur de liquide redescend à un niveau minimum Mi et, d'autre part, à la commande d'un système d'alerte de manière à activer ce système lorsque la hauteur de liquide atteint un niveau de sécurité Ns supérieur au niveau Ma. Ce dispositif comprenant deux capteurs optiques (100a, 100b) situés aux niveaux Mi et Ma et connectés à la commande de la pompe, un flotteur (123) susceptible d'être soulevé par le liquide, un aimant (124) porté par ledit flotteur, un interrupteur à lames (131c) connecté à la commande du système d'alarme, et des moyens (130) pour maintenir le flotteur (123) au dessus du niveau Ma.

## Description

La présente invention concerne un dispositif de détection de niveaux de liquide.

Un tel dispositif est prévu pour être utilisé dans des groupes frigorifiques, chaudières, ou des installations de climatisation dans lesquelles le liquide, ou condensat, qui résulte de la condensation de la vapeur d'eau présente dans l'air ambiant que l'on refroidit, est récupéré dans un bac. Dans ce type d'installation, il est nécessaire d'évacuer régulièrement le liquide récupéré, d'une part pour éviter le débordement du bac de récupération, et d'autre part pour limiter les risques de contamination bactérienne liés à la stagnation du liquide dans ce bac.

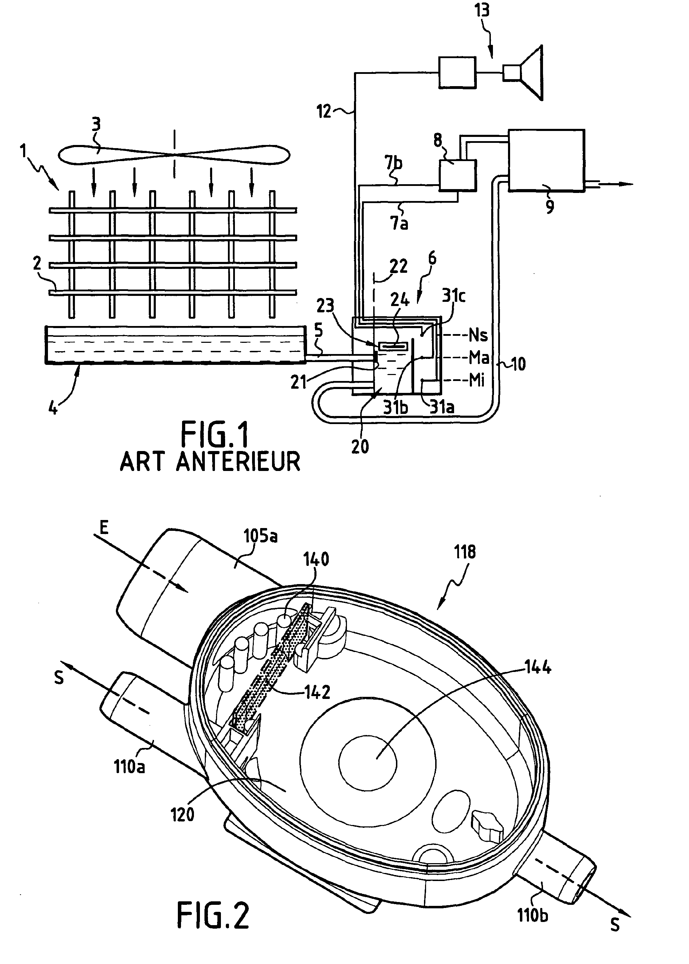

Un exemple d'installation de climatisation équipée d'un dispositif de détection de niveaux de liquide connu, est représenté schématiquement figure 1.

L'installation 1 comprend un échangeur 2 à l'intérieur duquel circule un fluide réfrigérant, un ventilateur 3 destiné à mettre l'air ambiant en mouvement pour l'amener au contact de l'échangeur 2, et un bac de récupération de liquide 4 disposé sous l'échangeur. Lorsque l'air ambiant plus ou moins humide est refroidi au contact de l'échangeur 2, la vapeur d'eau contenue dans l'air se condense et des gouttelettes se forment sur les parois extérieures de l'échangeur. Ces gouttelettes tombent ensuite par gravité dans le bac de récupération 4.

Pour évacuer le liquide récupéré dans le bac 4, l'installation comprend une pompe hydraulique 9 associée à un dispositif de détection de niveaux de liquide connu 6, décrit dans la demande de brevet d'invention française, publiée sous le numéro FR 2 716 715.

Ce dispositif de détection 6 comprend un réservoir 20 qui communique, d'une part avec le bac 4 par l'intermédiaire d'un conduit d'évacuation 5 et, d'autre part, avec la pompe hydraulique 9 par l'intermédiaire d'un conduit d'aspiration 10. A l'intérieur du réservoir se trouve un flotteur 23 libre de se déplacer verticalement en suivant le niveau du liquide dans le réservoir. Ce flotteur 23 renferme par ailleurs un aimant 24.

Au voisinage du trajet de l'aimant, se situent trois interrupteurs à lames souples 31a, 31b et 31c chacun scellé dans une ampoule et fixés tous trois à l'extérieur d'une paroi du réservoir 20. Ces interrupteurs de type « reed switch » sont susceptibles de se fermer sous l'effet du champ magnétique de l'aimant 24. Les interrupteurs 31a et 31b sont connectés par l'intermédiaire de deux circuits électriques 7a et 7b à la commande 8 de la pompe hydraulique 9. L'interrupteur 31c est connecté par l'intermédiaire d'un circuit électrique 12 à la commande d'un système d'alerte 13.

Ces interrupteurs 31a, 31b, 31c se situent respectivement à trois hauteurs différentes qui correspondent chacune sensiblement à trois niveaux de liquide à l'intérieur du réservoir 20:
- un niveau minimum Mi ;
- un niveau maximum autorisé Ma, supérieur au niveau Mi; et
- un niveau de sécurité Ns, supérieur au niveau Ma.

En mode de fonctionnement normal de l'installation 1, la hauteur de liquide à l'intérieur du réservoir 20 est compris entre les niveaux Ma et Mi. Lorsque la hauteur de liquide augmente jusqu'au niveau Ma, l'aimant 24 monte à la hauteur de l'interrupteur 31b qui se ferme. Le dispositif 8 de commande détecte alors la fermeture du circuit électrique 7b et met en fonctionnement la pompe 9 de manière à aspirer le liquide par le conduit d'aspiration 10. La pompe 9 refoule ensuite généralement ce liquide vers un tuyauterie d'eaux usées (non représentée). Lors du pompage, la hauteur de liquide redescend jusqu'au niveau Mi, de sorte que l'aimant arrive à la hauteur de l'interrupteur 31a qui se ferme. Le circuit électrique 7a est alors fermé et le dispositif 8 de commande arrête le fonctionnement de la pompe 9.

Dans ce type d'installation, il arrive parfois que la pompe 9 soit bouchée ou hors d'usage, que l'interrupteur 31b situé au niveau Ma soit hors d'usage, ou que la condensation de la vapeur d'eau soit anormalement élevée. Dans ce genre de situation, le liquide n'est plus pompé, ou pas assez rapidement, et la hauteur de liquide à l'intérieur du réservoir 20 augmente jusqu'au niveau Ns de sorte que l'interrupteur 31c se ferme ou s'ouvre selon le type de branchement. La fermeture ou l'ouverture du circuit électrique 12 déclenche la mise en marche du système d'alerte 13 qui prévient l'utilisateur ou un agent de maintenance du dysfonctionnement et donc du risque de débordement du réservoir du dispositif 6 ou du bac de récupération de liquide 4, et/ou qui coupe l'arrivée d'eau froide dans l'échangeur 2, et/ou qui met en arrêt l'installation de climatisation 1.

Ce type de dispositif de détection de liquide connu présente toutefois des inconvénients liés aux impuretés (poussières, fibres...) présentes initialement dans l'environnement de l'installation 1 et qui se retrouvent dans le liquide récupéré dans le bac 4. Pour empêcher ces impuretés d'entrer dans le réservoir 20, il est prévu un filtre 21 entre le bac 4 et le réservoir 20. Comme ce filtre 21 s'encrasse, il est nécessaire de le nettoyer régulièrement pour éviter qu'il se bouche, ce qui provoquerait le débordement du bac 4.

Par ailleurs, on constate que certaines impuretés de petites tailles ne sont pas filtrées par le filtre 21, et viennent s'accrocher à la surface du flotteur 23 qui s'encrasse inévitablement. Or, cet encrassement perturbe le déplacement du flotteur 23 à l'intérieur du réservoir 20, et finit par provoquer son immobilisation dans la partie basse du réservoir 20. Le flotteur 23 ne peut alors plus jouer son rôle et, lors de la montée du liquide, la mise en fonctionnement de la pompe 9 et l'activation de l'alarme 13 ne sont plus assurées, de sorte que le réservoir 20 ou le bac de récupération 4 finissent par déborder.

Les sociétés chargées de la maintenance de ce type de dispositif 6 doivent donc régulièrement envoyer un agent nettoyer le flotteur 23 et le filtre 21 pour éviter tout risque de débordement du réservoir 20 ou du bac 4. Ces nettoyages réguliers étant onéreux en raison des frais de main d'oeuvre et de déplacement, on comprend l'intérêt de réduire leur fréquence.

La présente invention se propose de résoudre les inconvénients précités au moyen d'un nouveau dispositif de détection de niveaux de liquide.

Pour atteindre ce but, la présente invention a pour objet un dispositif de détection de niveaux de liquide, comprenant un réservoir apte à communiquer avec un bac de récupération de liquide et avec une pompe hydraulique, ce dispositif étant destiné à être connecté, d'une part, à la commande de la pompe hydraulique de manière à mettre la pompe en fonctionnement lorsque la hauteur de liquide dans le réservoir atteint un niveau maximum autorisé Ma et à arrêter le fonctionnement de la pompe lorsque la hauteur de liquide redescend à un niveau minimum Mi et, d'autre part, à la commande d'un système d'alerte de manière à activer ce système lorsque la hauteur de liquide atteint un niveau de sécurité Ns supérieur au niveau maximum autorisé Ma, caractérisé en ce qu'il comprend deux capteurs optiques situés aux niveaux minimum Mi et maximum autorisé Ma et connectés à la commande de la pompe, un flotteur susceptible d'être soulevé par le liquide, un aimant porté par ledit flotteur, un interrupteur à lames connecté à la commande du système d'alarme, situé au voisinage du niveau de sécurité Ns, au voisinage du trajet dudit aimant, et susceptible d'être actionné par le champ magnétique de ce dernier, et des moyens pour maintenir le flotteur au dessus du niveau maximum autorisé Ma.

Le recours à des capteur optiques est une solution simple et économique pour détecter la hauteur du liquide au niveaux Mi et Ma, et permet de s'affranchir de la présence du flotteur à ces niveaux. De plus, grâce aux moyens de maintien, en mode de fonctionnement normal du dispositif, c'est à dire lorsque le niveau de liquide varie entre les niveaux Mi et Ma, le flotteur est hors de portée pour le liquide et les impuretés stagnant dans ce liquide, de sorte que son encrassement est impossible. Ainsi, en cas de dysfonctionnement de la pompe ou du capteur du niveau Ma, le flotteur sera toujours en mesure de suivre la montée du liquide, ce qui permettra d'activer le système d'alerte.

Par ailleurs, dans le dispositif de l'invention, la présence d'un filtre entre le bac de récupération de condensat et le réservoir n'est pas indispensable puisque le flotteur ne risque plus de s'encrasser. Il est donc possible de concevoir un dispositif sans filtre, moins cher à fabriquer et qui n'a pas à être nettoyé.

Du reste, il peut être avantageux de prévoir de disposer au moins un filtre entre le réservoir et le bac de récupération de liquide, pour éviter l'intrusion d'impuretés qui risqueraient d'endommager des éléments du dispositif, voire la pompe située en aval de ce dernier. Comme ces impuretés sont généralement de taille importante, un filtre grossier, présentant des ouvertures suffisamment larges pour autoriser le passage des impuretés pouvant être pompées, peut convenir. Ce type de filtre s'encrassant moins rapidement que les filtres fins utilisés pour limiter l'encrassement du flotteur dans les dispositifs connus, la fréquence à laquelle il doit être nettoyé est moins élevée, et les coûts de maintenance s'en trouvent réduits.

Avantageusement, on utilisera au moins un filtre ayant sensiblement la forme d'un peigne, ce type de filtre ayant une structure simple et l'avantage de pouvoir être réalisé, par moulage par exemple, en une seule pièce avec une partie du corps du dispositif.

Selon un mode particulier de réalisation de l'invention le dispositif comprend des moyens de guidage du flotteur qui comprennent par exemple un tube sensiblement vertical traversant un alésage du flotteur. Ces moyens de guidage garantissent un déplacement correct du flotteur à l'intérieur du réservoir et donc un bon fonctionnement du dispositif.

Avantageusement, un jeu suffisant est prévu entre le tube et le flotteur pour permettre au flotteur de coulisser le long du tube lorsque ce dernier est légèrement incliné par rapport à la verticale. Ainsi, lors de la mise en place du dispositif, on admet que le tube puisse être légèrement incliné, c'est à dire former un angle de 15° maximum avec la verticale. Cette tolérance permet de faciliter l'installation du dispositif, et de garantir son bon fonctionnement en cas d'inclinaison du tube.

Selon un mode particulier de réalisation du dispositif, les moyens de maintien du flotteur au dessus du niveau maximum autorisé comprennent une butée portée par le tube, amovible de préférence. Cette butée peut comprendre au moins une excroissance formée sur la paroi extérieure du tube, toute pièce annulaire ou rondelle, fendue ou non, ayant de préférence des propriétés élastiques, apte à se loger dans une rainure annulaire périphérique ménagée sur le tube, ou par une tige traversant un alésage pratiqué dans le tube.

Avantageusement, ladite butée comprend un joint torique élastique, apte à être engagé à l'intérieur d'une rainure annulaire périphérique ménagée sur le tube.

La présente invention et ses avantages seront mieux compris à la lecture de la description détaillée qui suit, d'un mode de réalisation particulier de l'invention. Cette description se réfère aux dessins annexés sur lesquels :
- La figure 1 représente schématiquement un exemple d'installation de climatisation équipée d'un dispositif de détection de niveaux de liquide de type connu ;
- La figure 2 est une vue en perspective de la partie inférieure d'un dispositif de détection de niveaux de liquide selon l'invention ;
- La figure 3 est une vue en perspective de la partie supérieure du dispositif de la figure 2 ; et
- La figure 4 est une vue en coupe de l'ensemble du dispositif représenté figures 2 et 3.

Le dispositif 106 représenté sur les figures 2, 3, et 4, est destiné à être intégré à la place d'un dispositif 6 de type connu, dans une installation de climatisation 1 analogue à celle précédemment décrite et représentée figure 1. Par conséquent, le dispositif 106 est destiné à communiquer avec le bac 4 de récupération de liquide et la pompe hydraulique 9, et à être connecté à la commande de la pompe 9 ainsi qu'à celle du système d'alerte 13.

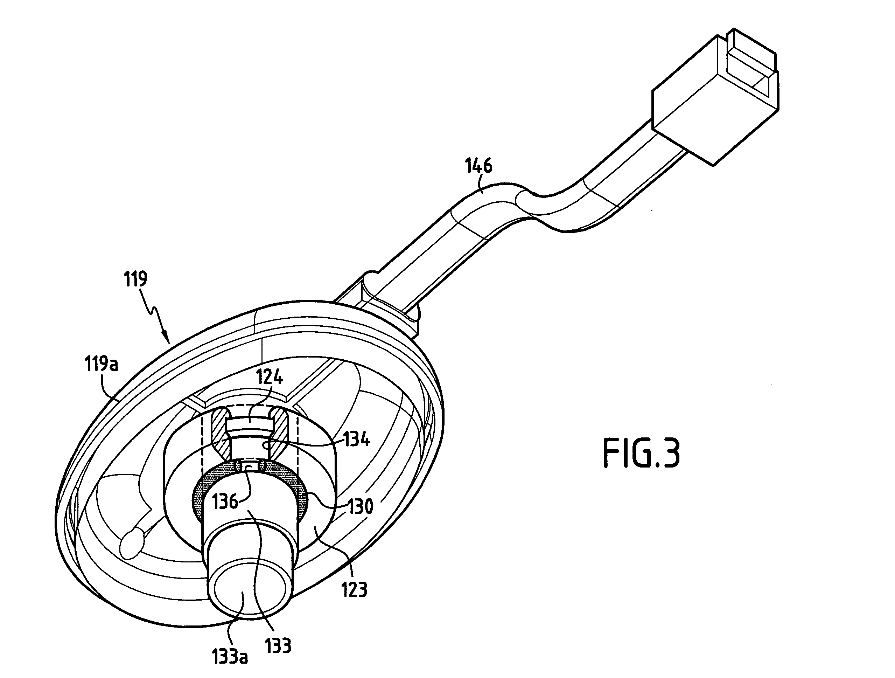

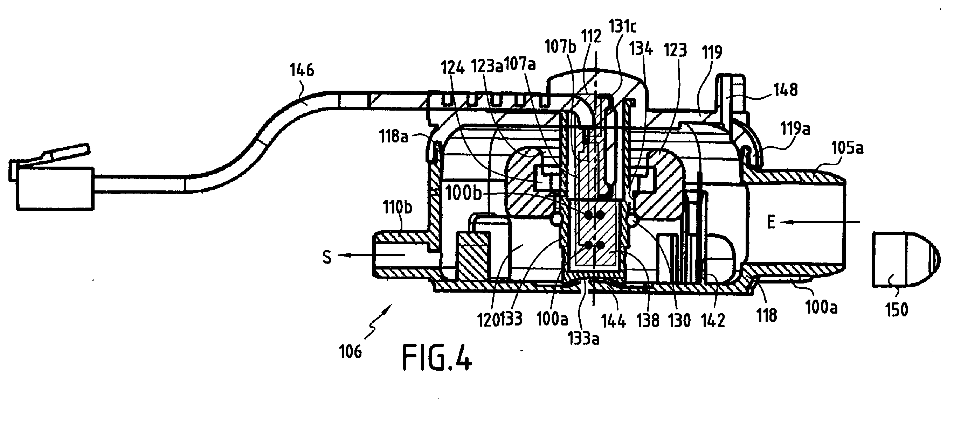

En référence aux figures, le dispositif 106 de l'invention comprend une partie inférieure représentée figure 2, et une partie supérieure représentée figure 3. Ces deux parties sont destinées à être assemblées, comme représenté figure 4.

La partie inférieure comprend le corps 118 qui définit un réservoir 120 susceptible de communiquer avec l'extérieur par trois ouvertures situées dans sa partie basse et prolongées par trois raccords : un raccord d'entrée 105a et deux raccords de sortie 110a et 110b. Le raccord 110a jouxte la raccord 105a, tandis que le raccord 110b fait saillie sur la face opposée au raccord 105a.

Le raccord d'entrée 105a est destiné à être engagé dans le conduit d'évacuation 5, de sorte que le liquide récupéré dans le bac 4 puisse s'écouler jusque dans le réservoir 120 suivant la flèche E. Pour faciliter cet écoulement, le fond du bac 4 peut être plus ou moins incliné, voire présenter une forme tronconique avec un trou central, permettant l'évacuation du liquide récupéré, et le bac 4 est placé plus haut ou à la même hauteur que le dispositif 106.

Les raccords de sortie 110a et 110b sont tous deux aptes à être engagés dans le conduit d'aspiration 10 de sorte que le liquide puisse être pompé par la pompe 9 suivant l'une des flèches S. Lors de l'installation du dispositif 106, un seul des deux raccords est utilisé, l'autre étant obturé par un bouchon 150. Il est en effet intéressant de pouvoir choisir le raccord que l'on souhaite utiliser en fonction de la position relative du conduit d'aspiration 10 par rapport au conduit d'évacuation 5, cette position pouvant varier d'une installation de climatisation à l'autre.

Par ailleurs, comme représenté figure 2, deux filtres 140 et 142 sont disposés à l'entrée du réservoir 120, au niveau du raccord 105a. Le premier filtre 140 a la forme générale d'un peigne à quatre dents. Ces dents ont été moulées avec le corps 118. Le second filtre 142 est amovible et optionnel. Il est supporté par deux glissières présentes sur le bord latéral intérieur du corps 118. Ces deux filtres 140, 142, ou le premier filtre 140 lorsqu'il est seul, ont pour but d'empêcher l'intrusion de certaines impuretés présentes dans le liquide récupéré dans le bac 4, à l'intérieur du réservoir 120. La distance séparant les dents du filtre 140 ou le diamètre des ouvertures du filtre 142 sont choisis en fonction de la taille des impuretés que l'on souhaite filtrer.

En référence à la figure 3, la partie supérieure du dispositif 106 comprend un couvercle 119, un tube 133, un flotteur 123, un joint torique 130 et une gaine 146. Le couvercle 119 présente une face interne, une face externe, et sur son bord une jupe 119a apte à coopérer avec le bord supérieur 118a du corps 118, comme représenté figure 4, lorsque les parties supérieure et inférieure du dispositif 106 sont assemblées.

Le tube 133 est réalisé en matière translucide, de préférence en polymère, il est fixé au couvercle 119 et dépasse du côté de sa face interne. En condition d'utilisation du dispositif 106, l'axe du tube 133 est sensiblement à la verticale. Ce tube 133 présente sensiblement à mi-hauteur une rainure annulaire périphérique 136. En outre, ce tube 133 est creux, sa section horizontale est circulaire et il est fermé à son extrémité inférieure par une paroi 133a. La face extérieure de cette paroi 133a est concave, ce qui permet de recevoir une bosse 144 présente sur la paroi de fond du corps 118. Lorsque les parties supérieure et inférieure du dispositif 106 sont assemblées, une extrémité du tube 133 est fixée au couvercle 119, et son autre extrémité est en appui, ou effleure la bosse 144, de sorte qu'on est assuré du bon positionnement du tube 133 à l'intérieur du réservoir 120.

Le flotteur 123 a la forme générale d'une bague : sa section horizontale est circulaire, et il est traversé verticalement en son centre par un alésage 134. Une rainure est ménagée sur le pourtour intérieur de ce flotteur, de manière à recevoir un aimant annulaire 124. Pour faciliter la mise en place de cet aimant 124 à l'intérieur de ladite rainure, le bord supérieur intérieur 123a du flotteur 123 est arrondi, ou chanfreiné, l'alésage 134 présente un diamètre plus important au niveau de ce bord 123a, et le bord 123a du flotteur est de préférence élastiquement déformable. Selon un autre mode de mise en place de l'aimant 124, on surmoule le flotteur, par exemple en polystyrène expansé, autour de ce dernier.

Lors du montage du dispositif, on introduit d'abord le tube 133 dans l'alésage 134 du flotteur 123. Un jeu est prévu entre ces deux éléments 123 et 133, pour permettre au flotteur 123 de coulisser le long du tube 133. Ensuite, on passe autour du tube 133 un joint torique élastique 130, qui vient se loger en partie dans la rainure 136. Ce joint 130 forme une butée pour le flotteur 123, et limite le déplacement de ce dernier le long du tube 133.

En référence à la figure 4, deux capteurs optiques 100a et 100b, et un interrupteur à lames 131c sont disposés à l'intérieur du tube 133, réalisé en matière translucide. Ces trois éléments sont solidaires d'un même support 138 en forme de plaque, logé à l'intérieur du tube 133. Lors du montage, le support 138 est d'abord placé à l'intérieur du tube 133, et de la matière translucide, par exemple de la résine époxy ou un matériau polymère comme le polyéthylène surmoule, en le remplissant autour du support 138, le tube 133, et le tube 133 est fixé au couvercle 119.

De bas en haut, sont fixés au support 138, le premier capteur optique 100a, le second 100b, et l'interrupteur 131c. Le premier capteur 100a est situé au niveau minimum Mi du liquide à l'intérieur du réservoir 120. Le second 100b est situé au niveau maximum autorisé Ma, et l'interrupteur 131c est au voisinage du niveau de sécurité Ns, c'est-à-dire un peu plus haut que ce niveau de sécurité Ns. Ce léger décalage en hauteur correspond à la distance séparant la ligne de flottaison du flotteur 123 de l'aimant 124. Ainsi, lorsque la ligne de flottaison du flotteur 123 est au niveau Ns, l'aimant 124 se situe à la hauteur de l'interrupteur 131c.

Chaque capteur optique 100a, 100b comprend un émetteur de lumière, par exemple une diode électroluminescente, et un récepteur de lumière, par exemple un phototransistor. Lorsque le liquide n'est pas au niveau du capteur, le rayon de lumière émis par l'émetteur est réfléchi vers le récepteur qui détecte ce rayon. A l'inverse, lorsque le liquide est au niveau du capteur, le rayon n'est pas réfléchi, et le récepteur ne détecte plus ce rayon. En fonction de la lumière reçue ou non par le récepteur, le capteur détecte la présence ou l'absence de liquide à son niveau. Pour le bon fonctionnement des capteurs, il est important que le tube 133 et la matière le remplissant soient translucides de manière à laisser passer la lumière.

On comprend bien que d'autres types de capteurs optiques, peuvent être utilisés du moment qu'ils permettent de détecter si la hauteur du liquide à l'intérieur du réservoir 120 atteint ou non un certain niveau. En effet, l'intérêt principal de ces capteurs est d'éviter d'avoir recours à un flotteur pour détecter la hauteur de liquide aux niveaux Ma et Mi, ce flotteur s'encrassant inévitablement.

Les capteurs 100a et 100b sont reliés électriquement par le biais des circuits électriques 107a et 107b à la commande 8 de la pompe hydraulique 9. L'interrupteur 131c est quant à lui relié à la commande du système d'alarme 13 au moyen du circuit 112. Tous ces circuits 107a, 107b et 112 sont regroupés et passés dans la gaine 146 qui est solidaire du couvercle 119.

La structure du dispositif 106 de l'invention étant bien comprise, on va maintenant décrire son mode de fonctionnement. Le liquide récupéré dans le bac 4 s'écoule vers le réservoir 120 du dispositif 106 suivant la flèche E, et est filtré à l'entrée du réservoir par un 140 ou deux 140, 142 filtres. En conséquence, la hauteur de liquide à l'intérieur du réservoir augmente et atteint le niveau maximum autorisé Ma, auquel se situe le capteur 100b. Ce dernier détecte alors la présence du liquide à son niveau, et change d'état. Ce changement est détecté par la commande 8 qui met la pompe 9 en marche. Le liquide contenu dans le réservoir 120 est alors pompé suivant l'une des flèches S, et la hauteur de liquide diminue jusqu'à atteindre le niveau minimum Mi, auquel se situe le capteur 100a. Ce dernier détecte alors la présence du liquide à son niveau, et change d'état. La commande 8 détecte ce changement et arrête la pompe 9. La hauteur du liquide dans le réservoir 120 va ainsi de nouveau pouvoir augmenter. Ces cycles de variation de hauteur de liquide entre les niveaux Ma et Mi caractérisent le mode de fonctionnement normal du dispositif.

En cas de dysfonctionnement du dispositif, et plus précisément du capteur 100b, de la commande 8, de la pompe 9, ou de l'installation de climatisation 1, le liquide n'est plus, ou pas assez rapidement, pompé et la hauteur de liquide augmente jusqu'à atteindre la ligne de flottaison du flotteur 123. Ce flotteur 123 qui jusqu'ici était maintenu hors du liquide par les moyens de maintien comprenant le joint torique 130 disposé dans la rainure 136, est alors soulevé par le liquide et se déplace vers le haut en étant guidé par les moyens de guidage formés par le tube 133 autour duquel il coulisse.

En règle générale, le couvercle 119 est sensiblement à l'horizontale, de sorte que le tube 133, perpendiculaire à ce dernier, est sensiblement à la verticale. Il arrive toutefois que le dispositif 106 soit mal installé, que son intégration ne permette pas de placer verticalement le tube 133, qu'il ait été bousculé par mégarde, ou encore que le tube 133 n'ait pas été positionné correctement à l'intérieur du dispositif. Dans ce genre de situation, le tube 133 peut être légèrement incliné par rapport à la verticale. Pour que le flotteur 123 puisse toujours coulisser sur le tube 133, quelle que soit l'inclinaison de ce dernier comprise entre plus et moins 15° par rapport à la verticale, il est prévu un jeu suffisant entre l'alésage 134 du flotteur 123 et le tube 133.

Lorsque la hauteur de liquide, et donc la ligne de flottaison du flotteur 123, atteint le niveau de sécurité Ns, l'aimant 124 se retrouve à la hauteur de l'interrupteur 131c qui se ferme, ou s'ouvre. La fermeture, ou l'ouverture, du circuit 112 est alors détectée par la commande du système d'alerte 13 qui active ce dernier, ce qui permet d'avertir l'utilisateur ou un agent de maintenance du dysfonctionnement du système, ou de couper l'arrivée de liquide frigorifique dans l'échangeur 2, ou encore de mettre en arrêt l'installation de climatisation 1.

Le flotteur 123 n'étant jamais au contact du liquide en mode de fonctionnement normal du système, il ne s'encrasse pas et n'a donc pas à être nettoyé. De plus, il n'est pas nécessaire pour éviter son encrassement de filtrer le plus d'impuretés possible, de sorte que le ou les filtres utilisés peuvent être choisis de manière à ne filtrer que de grosses impuretés qui risqueraient de perturber le fonctionnement du dispositif. Ces filtres plus grossiers s'encrassant moins vite que les filtres fins utilisés dans les dispositifs connus pour limiter l'encrassement du flotteur, la fréquence à laquelle ils doivent être nettoyés est plus faible et la maintenance du dispositif s'en trouve simplifiée.

## Revendications

1. Dispositif de détection de niveaux de liquide comprenant un réservoir (120) apte à communiquer avec un bac (4) de récupération de liquide et avec une pompe hydraulique (9), ce dispositif (106) étant destiné à être connecté, d'une part, à la commande (8) de la pompe hydraulique (9) de manière à mettre la pompe en fonctionnement lorsque la hauteur de liquide dans le réservoir (120) atteint un niveau maximum autorisé (Ma) et à arrêter le fonctionnement de la pompe (9) lorsque la hauteur de liquide redescend à un niveau minimum (Mi) et, d'autre part, à la commande d'un système d'alerte (13) de manière à activer ce système lorsque la hauteur de liquide atteint un niveau de sécurité (Ns) supérieur au niveau maximum autorisé (Ma), **caractérisé en ce qu'**il comprend deux capteurs optiques (100a, 100b) situés aux niveaux minimum (Mi) et maximum autorisé (Ma) et connectés à la commande (8) de la pompe (9), un flotteur (123) susceptible d'être soulevé par le liquide, un aimant (124) porté par ledit flotteur, un interrupteur à lames (131c) connecté à la commande du système d'alarme (13), situé au voisinage du niveau de sécurité (Ns), au voisinage du trajet dudit aimant (124), et susceptible d'être actionné par le champ magnétique de ce dernier, et des moyens (130) pour maintenir le flotteur (123) au dessus du niveau maximum autorisé (Ma).

2. Dispositif selon la revendication 1, **caractérisé en ce qu'**il comprend des moyens de guidage du flotteur (123).

3. Dispositif selon la revendication 2, **caractérisé en ce que** les moyens de guidage du flotteur comprennent un tube (133) sensiblement vertical traversant un alésage (134) du flotteur (123).

4. Dispositif selon la revendication 3 **caractérisé en ce qu'**un jeu suffisant est prévu entre le tube (133) et le flotteur (123) pour permettre au flotteur de coulisser le long du tube lorsque ce dernier est légèrement incliné par rapport à la verticale.

5. Dispositif selon la revendication 3 ou 4, **caractérisé en ce que** les moyens de maintien du flotteur (123) au dessus du niveau maximum autorisé (Ma) comprennent une butée (130) portée par ledit tube (133).

6. Dispositif selon la revendication 5, **caractérisé en ce que** ladite butée comprend un joint torique élastique (130) apte à être engagé dans une rainure annulaire périphérique (136) ménagée sur ledit tube (133).

7. Dispositif selon l'une quelconque des revendications 3 à 6 **caractérisé en ce que** ledit tube (133) est réalisé en matière translucide, les deux capteurs optiques (100a, 100b) et l'interrupteur à lames (131c) étant disposés à l'intérieur dudit tube (133).

8. Dispositif selon l'une quelconque des revendications précédentes **caractérisé en ce que** les deux capteurs optiques (100a, 100b) et l'interrupteur à lames (131c) sont solidaires d'un même support (138).

9. Dispositif selon l'une quelconque des revendications précédentes **caractérisé en ce qu'**il comprend au moins un filtre (140, 142) disposé entre le réservoir (120) et le bac (4) de récupération de liquide.

10. Dispositif selon la revendication précédente **caractérisé en ce que** ledit filtre (140) a sensiblement la forme d'un peigne.
